# EUROPEAN PATENT SPECIFICATION

(11) **EP 4 081 089 B1**
(45) Date of publication and mention of the grant of the patent: **24.06.2026**
(21) Application number: 19832695.1
(22) Date of filing: 23.12.2019
(51) Int. Cl.: A47L 9/28

(54) **MOVEMENT OF OBJECTS BY A ROBOTIC CLEANING DEVICE**
BEWEGUNG VON GEGENSTÄNDEN DURCH EINE ROBOTERREINIGUNGSVORRICHTUNG
MOUVEMENT D'OBJETS PAR UN DISPOSITIF DE NETTOYAGE ROBOTISÉ

(43) Date of publication of application: 02.11.2022
(73) Proprietor: Aktiebolaget Electrolux, 105 45 Stockholm (SE)
(72) Inventor: FORSBERG, Petter, 105 45 Stockholm (SE); WENNERSTRÖM, Magnus, 105 45 Stockholm (SE); LINDHE, Magnus, 105 45 Stockholm (SE); KANGE, Fredrik, 105 45 Stockholm (SE)
(74) Representative: Electrolux Group Patents
(86) International application number: PCT/EP2019/086897
(87) International publication number: WO 2021/129918

(56) References cited:
- CN-A- 110 393 482
- US-A1- 2018 210 445
- US-A1- 2019 086 921

## Description

### TECHNICAL FIELD

The present disclosure relates to a method of controlling movement of a robotic cleaning device and a robotic cleaning device performing the method.

### BACKGROUND

In many fields of technology, it is desirable to use robots with an autonomous behaviour such that they freely can move around a space without colliding with possible obstacles.

Robotic vacuum cleaners are known in the art, which are equipped with drive means in the form of a motor for moving the cleaner across a surface to be cleaned. The robotic vacuum cleaners are further equipped with intelligence in the form of microprocessor(s) and navigation means for causing an autonomous behaviour such that the robotic vacuum cleaners freely can move around and clean a surface in the form of e.g. a floor. Thus, these prior art robotic vacuum cleaners have the capability of more or less autonomously moving across, and vacuum-cleaning, a room without colliding with obstacles located in the room, such as furniture, pets, walls, doors, etc. For example, US2018/210445A1 describes that a robot stores a "movement map" that may include information on locations of obstacles.

A problem in the art is that the robotic vacuum cleaner may be prevented from cleaning a surface by obstacles being placed on the surface to be cleaned.

### SUMMARY

An objective is to solve, or at least mitigate, this problem in the art and to provide and improved method of controlling movement of a robotic cleaning device.

This objective is attained in a first aspect by a method of controlling movement of a robotic cleaning device. The method comprising acquiring historical data forming a representation of an environment in which the robotic cleaning device moves and controlling movement of the robotic cleaning device to exert a force onto an object located in the environment to move the object based on the acquired historical data.

This objective is further attained in a second aspect by a robotic cleaning device comprising a propulsion system configured to move the robotic cleaning device over an area to be cleaned, a memory configured to store historical data forming a representation of an environment in which the robotic cleaning device moves, a camera device arranged to capture images of the environment and a controller configured to acquire the historical data forming a representation of an environment in which the robotic cleaning device moves and to control movement of the robotic cleaning device to exert a force onto an object located in the environment to move the object based on the acquired historical data.

For instance, assuming that a robotic cleaning device such as a robotic vacuum cleaner has been given an instruction to clean a house. After having cleaned a first room, the robotic vacuum cleaner heads towards a second adjacent room based on historical data which previously have been recorded by the robotic vacuum cleaner itself. By analysing the acquired historical data forming a representation of an environment in which the robotic vacuum cleaner moves, the robotic vacuum cleaner 100 is made aware that after having cleaned the first room, the robotic vacuum cleaner should head towards the second adjacent room for further cleaning. The historical data may be recorded by a camera of the robotic vacuum cleaner capturing images of the environment as the robotic vacuum cleaner is travelling over a surface to be cleaned and a controller of the robotic vacuum cleaner creating a representation of the environment extracting appropriate data from the captured images, for instance with a purpose of forming a map of the environment.

If the robotic vacuum cleaner encounters a door via which the robotic vacuum cleaner must pass upon travelling from the first room to the second room, the controller may, based on the registered historical data indicating that the robotic vacuum cleaner indeed is to travel from the first room to the second room via the door, control movement of the robotic vacuum cleaner such that the robotic vacuum cleaner will push against the door in order to exert a force onto the door, thereby pushing the door open such that the robotic vacuum cleaner may enter the second room.

In an embodiment, the robotic cleaning device is controlled to exert a pulling force onto the object to move the object based on the acquired historical data.

In an embodiment, the robotic cleaning device is controlled to move the object from a first position to a second position as indicated by the acquired historical data.

In an embodiment, the robotic cleaning device is controlled to return to the first position or cleaning a surface previously occupied by the moved object.

In an embodiment, the robotic cleaning device is controlled to exert a force onto the object to move the object back to the first position.

In an embodiment, the acquiring of historical data is performed by controlling the robotic cleaning device to move in said environment and record the data.

In an embodiment, the acquiring of historical data is performed by receiving the data from another robotic cleaning device having been controlled to move in said environment and record the data.

In an embodiment, the robotic cleaning device is controlled to exert a force onto an object located in the environment to move the object to attain a desired orientation based on the acquired historical data.

In an embodiment, the historical data further comprises a statistical distribution of a frequency with which the robotic cleaning device is capable of reaching sections of a surface to be cleaned without moving objects.

In an embodiment, wherein the historical data further comprises a statistical distribution of expected poses of objects in said environment.

In a third aspect, a computer program comprising computer-executable instructions is provided for causing the robotic cleaning device to perform the method of the first aspect when the computer-executable instructions are executed on a controller (116) included in the device.

In a fourth aspect, a computer program product comprising a computer readable medium is provided, the computer readable medium having the computer program according to the third aspect embodied thereon.

Further embodiments will be discussed in the following,

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figures 1a-1c illustrate a robotic vacuum cleaner pushing a door open according to an embodiment upon moving over a surface to be cleaned;
Figure 1d shows a flowchart illustrating a method of controlling movement of a robotic vacuum cleaner according to an embodiment;
Figures 1e-1g illustrate a robotic vacuum cleaner pushing a door closed according to an embodiment upon moving over a surface to be cleaned;
Figures 1h-1j illustrate a robotic vacuum cleaner pulling a door closed by means of suction force according to an embodiment upon moving over a surface to be cleaned;
Figures 2a-2c illustrate a robotic vacuum cleaner pushing a door closed according to another embodiment upon moving over a surface to be cleaned;
Figures 3a-3c illustrate a robotic vacuum cleaner according to an embodiment pushing an object over a surface to be cleaned;
Figures 4a-4c illustrate a robotic vacuum cleaner according to an embodiment pushing a chair into a desired position and orientation;
Figures 5a-5c illustrate a robotic vacuum cleaner pushing a door open by means of frictional force according to an embodiment;
Figure 6 shows a flowchart illustrating a method of controlling movement of a robotic vacuum cleaner according to an embodiment;
Figure 7 shows a robotic cleaning device according to an embodiment in a bottom view; and
Figure 8 shows the robotic cleaning device of Figure 6 in a front view.

### DETAILED DESCRIPTION

The aspects of the present disclosure will now be described more fully hereinafter with reference to the accompanying drawings, in which certain embodiments are shown.

These aspects may, however, be embodied in many different forms and should not be construed as limiting; rather, these embodiments are provided by way of example so that this disclosure will be thorough and complete, and to fully convey the scope of all aspects to those skilled in the art. Like numbers refer to like elements throughout the description.

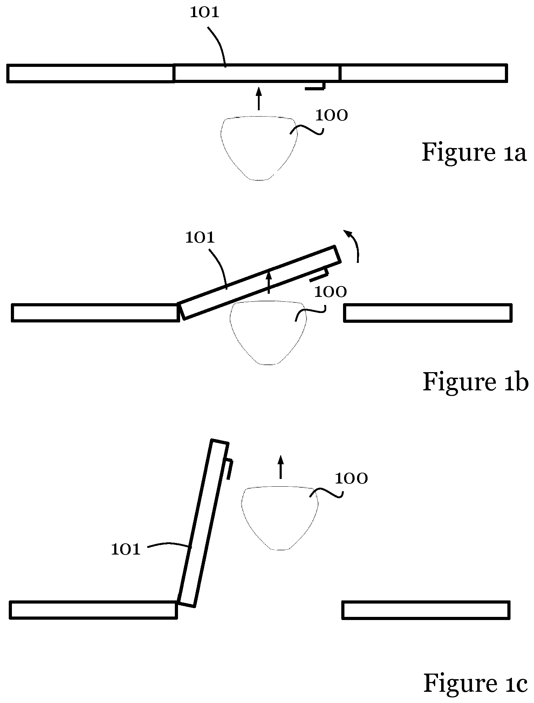

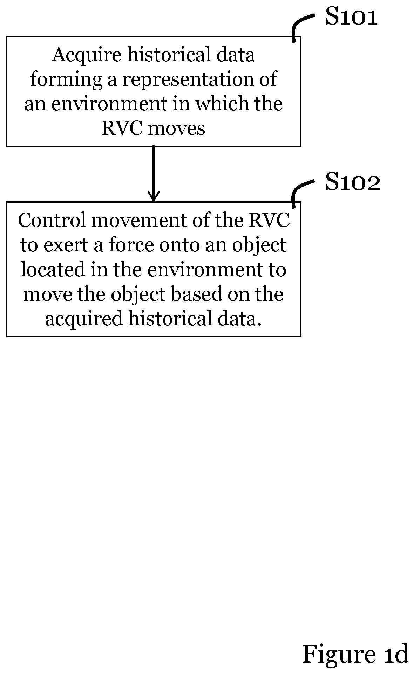

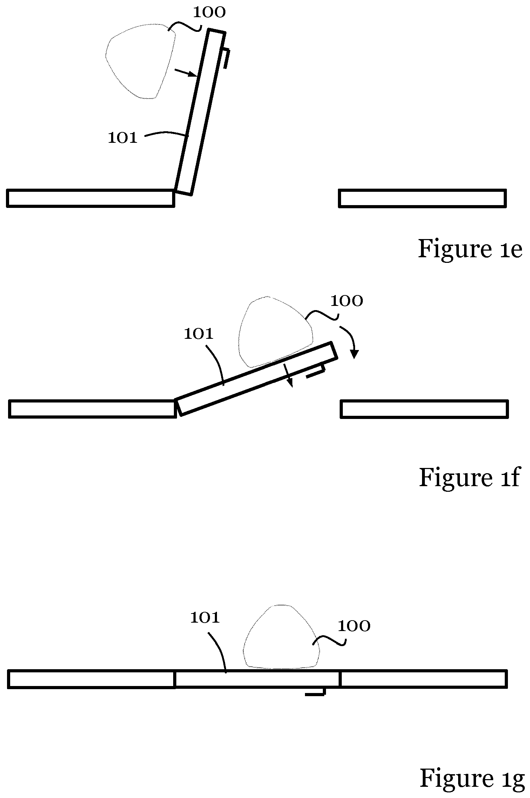

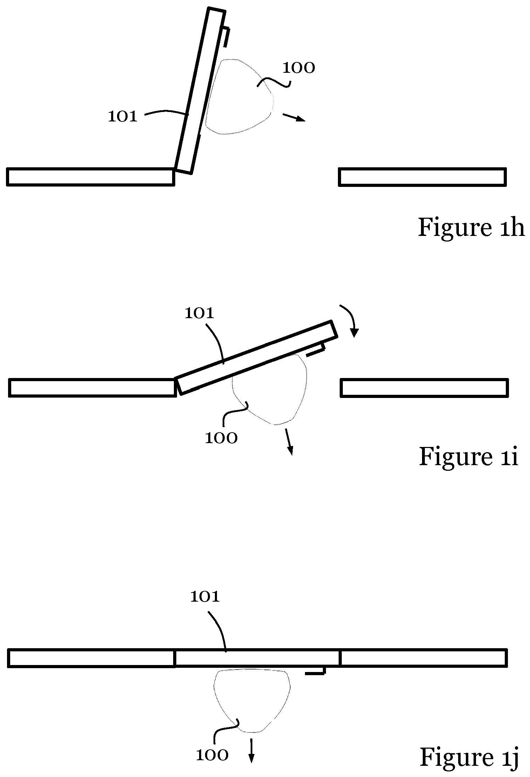

Figures 1a-1c illustrate a robotic vacuum cleaner 100 according to an embodiment moving over a surface to be cleaned. Figure 1d shows a flowchart illustrating a method of controlling movement of the robotic vacuum cleaner 100 according to an embodiment. In this particular embodiment, after having cleaned a first room, the robotic vacuum cleaner 100 heads towards a second adjacent room based on historical data acquired in step S101 by the robotic vacuum cleaner. The historical data may previously have been recorded by the robotic vacuum cleaner 100 itself, or possibly recorded by another robotic cleaning device and being transferred to the robotic vacuum cleaner 100).

Hence, by analysing the acquired historical data forming a representation of an environment in which the robotic vacuum cleaner 100 moves, the robotic vacuum cleaner 100 is made aware that after having cleaned the first room, the robotic vacuum cleaner 100 should head towards the second adjacent room for further cleaning. The historical data may be recorded by a camera of the robotic vacuum cleaner 100 capturing images of the environment as the robotic vacuum cleaner 100 is travelling over a surface to be cleaned and a controller of the robotic vacuum cleaner 100 creating a representation of the environment extracting appropriate data from the captured images, for instance with a purpose of forming a map of the environment.

In this particular embodiment, the robotic vacuum cleaner 100 encounters a door 101 via which the robotic vacuum cleaner 100 must pass upon travelling from the first room to the second room. Now, based on the registered historical data indicating that the robotic vacuum cleaner 100 indeed is to travel from the first room to the second room via the door 101, movement of the robotic vacuum cleaner 100 will be controlled in step S102 (e.g. by an robotic vacuum cleaner microcontroller to be described in more detail in the below) such that the robotic vacuum cleaner 100 will push against the door 101 in order to exert a force onto the door 101, thereby pushing the door 101 open as illustrated throughout Figures 1a-1c.

Figures 1e-1g illustrate that after the robotic vacuum cleaner 100 has opened the door 101 and entered the second, adjacent room, it may in an embodiment conclude from historical data that the door 101 should not be open (or at least not wide open), whereupon it pushes against the door 101 to close it. It may further be envisaged that the robotic vacuum cleaner 100 performs cleaning of the second room and thereafter returns to the first room from where the door is closed.

With reference to Figure 1f, in an embodiment the robotic vacuum cleaner 100 will after leaving the door 101 semi-open return to the area of the floor previously occupied by the door 101 as illustrated in Figure 1e and clean that part of the floor.

Alternatively, as illustrated in Figure 1h-1j, the robotic vacuum cleaner 100 is equipped with a suction portion (in a front end or at another appropriate location) via which it may exert a sucking force onto the door 101. In such embodiment, the robotic vacuum cleaner 100 would have to encounter the door 101 and exert the sucking force via its suction port while moving backwards to pull the door 101 closed.

It may also be envisaged that instead of an extra suction port, the robotic vacuum cleaner 100 is equipped with a tool such as a hook to pull the door 101 closed. The robotic vacuum cleaner 100 may also or alternatively be equipped with a shovel-like tool for pushing or lifting carpets, cables and the like. It may further be envisaged that a body of the robotic vacuum cleaner 100 is provided with one or more sticky surfaces via which it may exert a pulling force onto an object. It may yet further be envisaged that the body of the robotic vacuum cleaner 100 is provided with magnets for exerting a pulling force onto metallic objects. It may moreover be envisaged that the main body of the robotic vacuum cleaner 100 is arranged with an inflatable member which may be inflated to exert a pushing force onto an object upon the robotic vacuum cleaner 100 moving into contact with the object and then inflating the inflatable member.

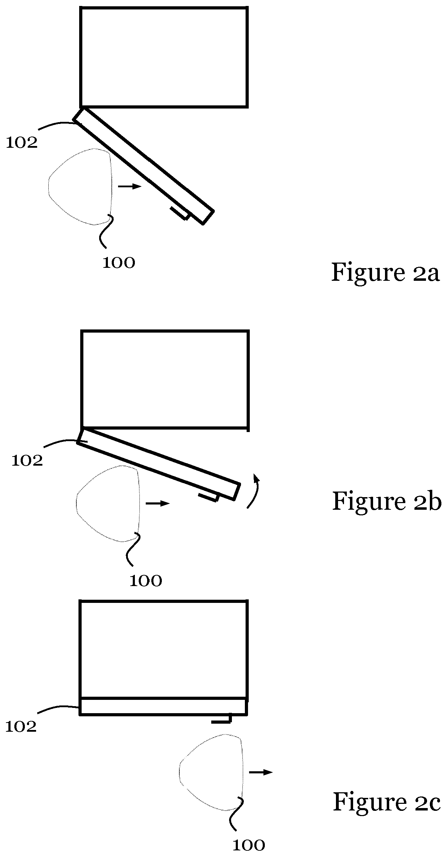

Figures 2a-2c illustrate the robotic vacuum cleaner 100 according to another embodiment moving over a surface to be cleaned. In this embodiment, when moving for instance over a kitchen floor, the robotic vacuum cleaner 100 notes - again by analysing historical data - that a door 102 of a refrigerator has been left open which is in conflict with the historical data not indicating an open refrigerator door 102.

Thus, based on the recorded historical data indicating that the door 102 indeed should be closed , the robotic vacuum cleaner 100 encounters the door 101 and pushes against the door 102 in order to exert a pushing force onto the door 102, thereby pushing the door 102 closed as illustrated throughout Figures 2a-2c.

As is understood, the robotic vacuum cleaner 100 may exert a force onto objects in case the robotic vacuum cleaner 100 is trapped or surrounded by objects in order to achieve a free path along which the robotic vacuum cleaner 100 can move.

It may be envisaged that the robotic vacuum cleaner 100 bumps into objects to identify the objects by the amount of force that is required to move the objects, frequency spectrum of vibrations caused during the collision with the objects and whether or not the objects move or spring back to their original position after a bump. It may further be analysed how the objects move upon being pushed, for instance to see if an object is a singular object or part of a larger object.

It may further be envisaged that the robotic vacuum cleaner 100 analyses upon colliding with an object whether an edge of the object indicates that it is a hard threshold or level difference in the floor, or a soft edge of a carpet.

Moreover, the robotic vacuum cleaner 100 can push and/or pull objects for instance to flip a switch (e.g. turning on/off indoor or outdoor lighting) or even unlock a door from the inside in order to let somebody in.

A tool such as a cloth, scraper, brush or powered appliance could be attached to the robotic vacuum cleaner 100 to clean floors or objects in a different manner, or reach other types of surfaces.

The robotic vacuum cleaner 100 could further push or pull its charging station to a different location if the charger is difficult to dock into.

It may also be envisaged that the robotic vacuum cleaner 100 may connect its battery to a wall outlet for charging, in which case a separate charging station is not required.

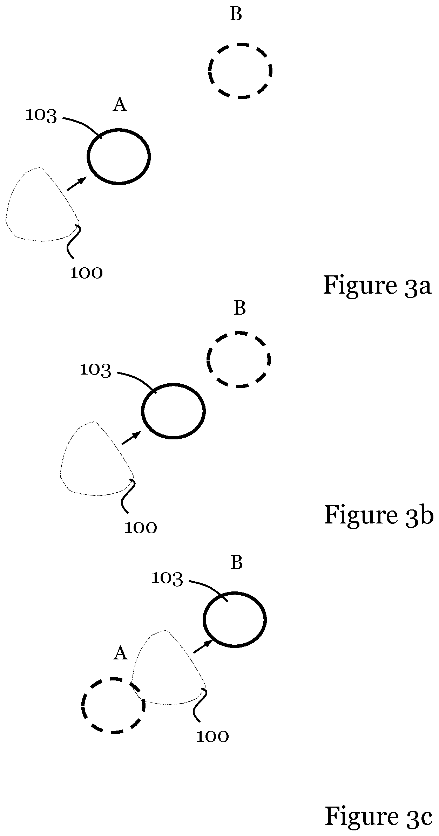

Figures 3a-3c illustrate the robotic vacuum cleaner 100 according to a further embodiment moving over a surface to be cleaned. In this embodiment, when moving for instance over a living room floor, the robotic vacuum cleaner 100 notes - again by analysing historical data - that a stool 103 has been placed at position A while in the representation of the environment as formed by the historical data, it is indicated that the stool 103 should be located at position B.

Consequently, the robotic vacuum cleaner 100 will move towards the stool 103 and push it along the living room floor until the stool 103 reaches the intended position B.

It may further be envisaged that the robotic vacuum cleaner 100 will return to position A for cleaning the surface that was occupied by the stool 103 in position A before it was moved to position B.

It may even be envisaged that the stool 103 indeed should be placed at position A, but since the robotic vacuum cleaner 100 needs to reach the area currently occupied by the stool 103, the robotic vacuum cleaner 100 will move the stool 103 out of position A, clean the area just occupied by the stool 103, and then push the stool 103 back to position A.

With further reference to the embodiment discussed in Figures 3a-3c, it may be envisaged that other types of objects are moved as a consequence of a displacement of the object as indicated by the recorded historical data.

As an example, it may be envisaged that toys are spread over the surface to be cleaned, which are moved by the robotic vacuum cleaner 100 to a designated area of the room, since the robotic vacuum cleaner 100 notes from the historical data that the toys should not be placed where they currently are. In another example, the acquired historical data may indicate that there are one or more areas on the surface where no objects are permanently located. The robotic vacuum cleaner 100 may thus determine that the toys are collected at said one or more areas (potentially after first having cleaned the areas). As is understood, the robotic vacuum cleaner 100 may categorize objects and then move the objects to different locations based on their category.

In another example, shoes spread all over a vestibule floor are collected and pushed by the robotic vacuum cleaner 100 onto a vestibule carpet or the like. In an embodiment, it is further envisaged that a cleaning member for removing debris and dust from the surface to be cleaned in the form of a rotatable brush roll is switched off to avoid any objects such as e.g. shoestrings being entangled during moving of certain objects.

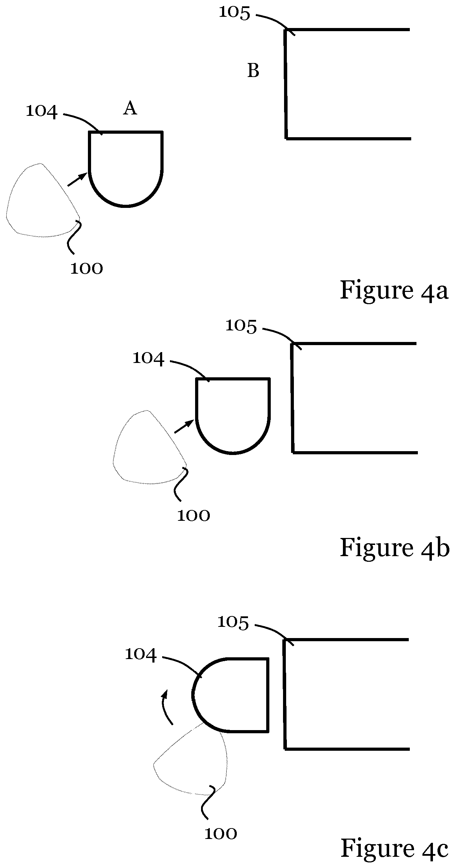

Figures 4a-4c illustrate the robotic vacuum cleaner 100 according to a further embodiment moving over a surface to be cleaned. In this embodiment, when moving for instance over a kitchen floor, the robotic vacuum cleaner 100 notes - again by analysing historical data - that a chair 104 has been placed at position A while in the representation of the environment as formed by the historical data, it is indicated that the chair 104 should be located at position B close to a kitchen table 105.

Consequently, the robotic vacuum cleaner 100 will move towards the chair 104 and push it along the kitchen floor until the chair 104 reaches the intended position at the table 105 as shown in Figures 4a and 4b.

Now, in this embodiment, the robotic vacuum cleaner 100 will further by analysing the historical data determine a desired orientation of the chair 104. That is, the orientation of the chair 104 should in this example be aligned with the orientation of the table 105.

The robotic vacuum cleaner 100 may come to this conclusion either by actually deducing the desired orientation of the chair 104 directly from the acquired historical data, or by moving the chair 104 to the table 105 as concluded from the acquired historical data, and thereafter determine from the orientation of the table 105 that the chair 105 in this example should be rotated about 90° in a clockwise direction, as shown in Figure 4c, wherein the movement of the robotic vacuum cleaner 100 will be controlled such that the robotic vacuum cleaner 100 exerts a force onto the chair 104 causing a 90° clockwise rotation of the chair 104.

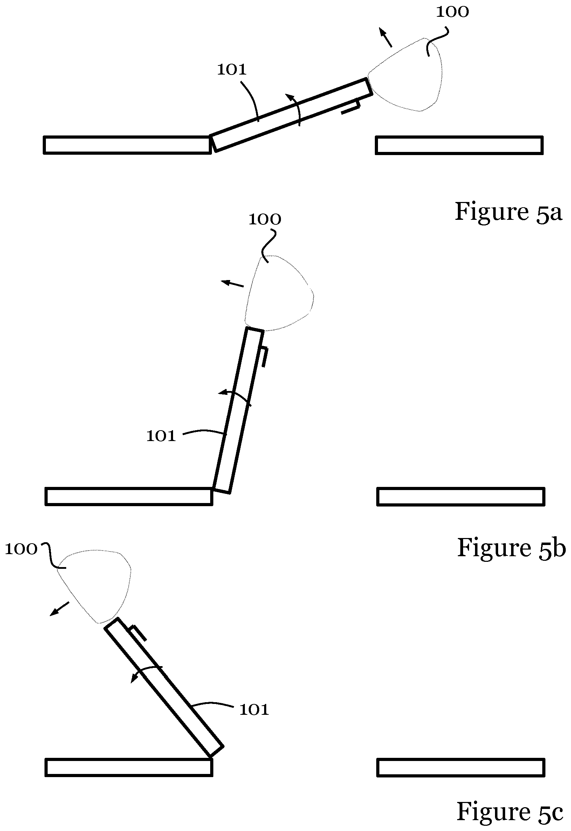

Figures 5a-5c illustrate an robotic vacuum cleaner 100 according to an embodiment moving over a surface to be cleaned. In this particular embodiment, after having cleaned a first room, the robotic vacuum cleaner 100 heads towards a second adjacent room based on historical data recorded by the robotic vacuum cleaner 100 (or possible recorded by another robotic cleaning device and being transferred to the robotic vacuum cleaner 100).

Now, upon opening the door 101, the robotic vacuum cleaner 100 does not necessarily push the door 101 open by exerting a pushing force onto the door, as performed for instance in Figures 1a-1c. Rather, the robotic vacuum cleaner 100 applies a frictional force onto a side of the door leaf to open the door 101 as shown throughout Figures 5a-5c. In order to increase the frictional force applied to the side of the door leaf, the main body of the robotic vacuum cleaner 100 may be arranged with a frictional surface. Advantageously, by exerting a frictional force on the side of the door leaf to open or close the door 101, the robotic vacuum cleaner 100 may still view the area in front of it, since the area is not obscured by the door 101. In this context, it should be mentioned that the robotic vacuum cleaner 100 may - regardless of whether it pulls, pushes or uses frictional force to move an object - inspect the area to which the object is moved in advance, or continuously by pausing the movement to inspect the area and then to continue the movement or not, for instance to avoid pushing an object down a stairway.

As is illustrated in embodiments throughout Figures 1a-1j, 2a-2c, 3a-3c, 4a-4b and 5a-5c; by having the robotic vacuum cleaner 100 record historical data (or acquiring the data having been recorded by another robotic vacuum cleaner), the movement of the robotic vacuum cleaner 100 may advantageously be controlled to exert a pushing or pulling force onto an object for moving the object based on the recorded historical data, for instance with the purpose to open/close a door or to move an object from one position to another, or even to align an orientation of an object with one or more adjacent objects.

In an embodiment, the acquired historical data further comprises a statistical distribution indicating when the robotic vacuum cleaner 100 is capable of freely reaching sections of the surface to be cleaned without moving objects. For instance, a floor of a room to be cleaned may be segmented into a plurality of square-shaped sections where an estimated probability that the robotic vacuum cleaner 100 is capable of freely reaching a given section is associated with that section. If the statistical distribution indicates that a particular section usually is reached without the robotic vacuum cleaner 100 having to move any objects - say at 8 out of 10 cleaning occasions - the more prone the robotic vacuum cleaner 100 will be to indeed move an object to reach that particular section, the rationale being that said object is likely to be misplaced since the robotic vacuum cleaner 100 normally is likely to reach the section without moving any objects.

In another embodiment, the acquired historical data constitutes a statistical distribution of poses (i.e. position and orientation) of each identifiable object that the robotic vacuum cleaner 100 encounters. If the statistical distribution indicates that a particular object usually (again at say 8 out of 10 occasions) is placed with a particular pose and the object currently attains that particular pose, the robotic vacuum cleaner 100 will not move that object. If the robotic vacuum cleaner 100 needs to move the object to reach the floor under the object, the robotic vacuum cleaner 100 will subsequently move the object back to its position, potentially even such that the object attains the orientation indicated to be most likely from the statistical distribution.

To the contrary, if an object is not indicated from the statistical distribution to be likely to be located at a particular position, the robotic vacuum cleaner 100 may move it to any appropriate position.

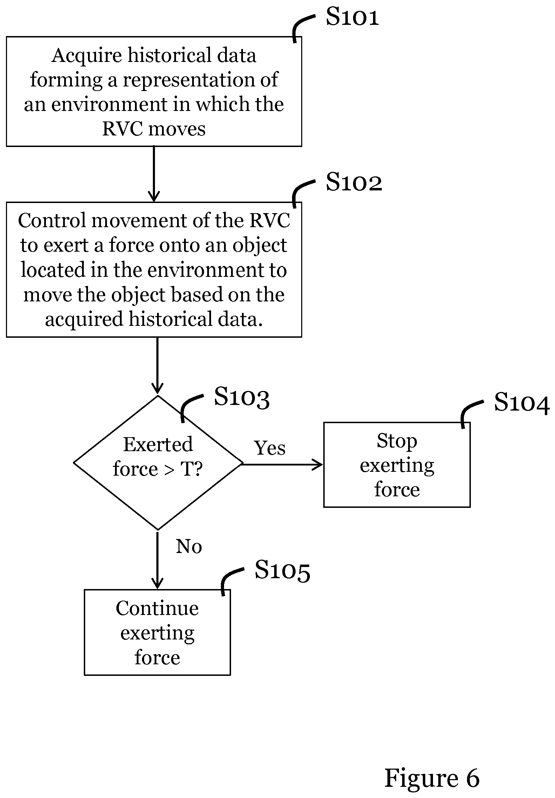

With reference to Figure 6, in a further embodiment, the robotic vacuum cleaner 100 determines in step S103 whether or not the force exerted onto the object exceeds a threshold value T and if so that it should stop exerting the force onto the object in step S104, for instance since the object may be too heavy to move or the robotic vacuum cleaner 100 may exert a too great force onto a fragile object.

For instance, power/current consumption of electric wheel motors enabling movement of driving wheels may be measured, and if the power or current consumption exceeds a threshold value T, the robotic vacuum cleaner 100 will stop exerting a force onto the object. In an alternative, if the driving wheels start slipping, the robotic vacuum cleaner 100 will stop exerting a force onto the object since the slipping indicates that the exerted force exceeds the threshold value T. To the contrary, if the exerted force does not exceed the threshold value T, the robotic vacuum cleaner 100 will continue to exert the force onto the object

The disclosure relates to robotic cleaning devices, or in other words, to automatic, self-propelled machines for cleaning a surface, e.g. a robotic vacuum cleaner, a robotic sweeper or a robotic floor washer. The robotic cleaning device according to embodiments can be mains-operated and have a cord, be battery-operated or use any other kind of suitable energy source, for example solar energy.

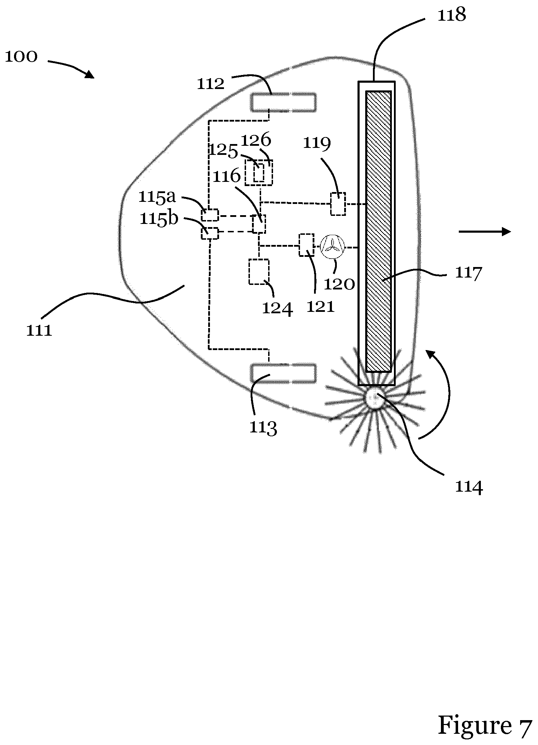

Even though it is envisaged that embodiments may be performed by a variety of appropriate robotic cleaning devices being equipped with sufficient processing intelligence, Figure 7 shows a robotic cleaning device 100 according to an embodiment in a bottom view, i.e. the underside of the robotic cleaning device is shown. The arrow indicates the forward direction of the robotic cleaning device 100 being illustrated in the form of an robotic vacuum cleaner.

The robotic vacuum cleaner 100 comprises a main body 111 housing components such as a propulsion system comprising driving means in the form of two electric wheel motors 115a, 115b for enabling movement of the driving wheels 112, 113 such that the robotic vacuum cleaner 100 can be moved over a surface to be cleaned. Each wheel motor 115a, 115b is capable of controlling the respective driving wheel 112, 113 to rotate independently of each other in order to move the robotic vacuum cleaner 100 across the surface to be cleaned. A number of different driving wheel arrangements, as well as various wheel motor arrangements, can be envisaged. It should be noted that the robotic vacuum cleaner 100 may have any appropriate shape, such as a device having a more traditional circular-shaped main body, or a triangular-shaped main body. As an alternative, a track propulsion system may be used or even a hovercraft propulsion system. The propulsion system may further be arranged to cause the robotic vacuum cleaner 100 to perform any one or more of a yaw, pitch, translation or roll movement.

A controller 116 such as a microprocessor controls the wheel motors 115a, 115b to rotate the driving wheels 112, 113 as required in view of information received from an obstacle detecting device (not shown in Figure 7) for detecting obstacles in the form of walls, floor lamps, table legs, around which the robotic cleaning device must navigate. The obstacle detecting device may be embodied in the form of a 3D sensor system registering its surroundings, implemented by means of e.g. a 3D camera, a camera in combination with lasers, a laser scanner, etc. for detecting obstacles and communicating information about any detected obstacle to the microprocessor 116. The microprocessor 116 communicates with the wheel motors 115a, 115b to control movement of the wheels 112, 113 in accordance with information provided by the obstacle detecting device such that the robotic vacuum cleaner 100 can move as desired across the surface to be cleaned.

Moreover, the main body 111 of the robotic vacuum cleaner 100 comprises a suction fan 120 creating an air flow for transporting debris to a dust bag or cyclone arrangement (not shown) housed in the main body via the opening 118 in the bottom side of the main body 111. The suction fan 120 is driven by a fan motor 121 communicatively connected to the controller 116 from which the fan motor 121 receives instructions for controlling the suction fan 120. The main body 111 may further be arranged with one or more rotating side brushes 114 adjacent to the opening 118.

Further, the main body 111 may optionally be arranged with a cleaning member 117 for removing debris and dust from the surface to be cleaned in the form of a rotatable brush roll arranged in an opening 118 at the bottom of the robotic cleaner 100. Thus, the rotatable brush roll 117 is arranged along a horizontal axis in the opening 118 to enhance the dust and debris collecting properties of the cleaning device 100. In order to rotate the brush roll 117, a brush roll motor 119 is operatively coupled to the brush roll to control its rotation in line with instructions received from the controller 116.

With further reference to Figure 7, the controller/processing unit 116 embodied in the form of one or more microprocessors is arranged to execute a computer program 125 downloaded to a suitable storage medium 126 associated with the microprocessor, such as a Random Access Memory (RAM), a Flash memory or a hard disk drive. The controller 116 is arranged to carry out a method according to embodiments when the appropriate computer program 125 comprising computer-executable instructions is downloaded to the storage medium 126 and executed by the controller 116. The storage medium 126 may also be a computer program product comprising the computer program 125. Alternatively, the computer program 125 may be transferred to the storage medium 126 by means of a suitable computer program product, such as a digital versatile disc (DVD), compact disc (CD) or a memory stick. As a further alternative, the computer program 125 may be downloaded to the storage medium 126 over a wired or wireless network. The controller 116 may alternatively be embodied in the form of a digital signal processor (DSP), an application specific integrated circuit (ASIC), a field-programmable gate array (FPGA), a complex programmable logic device (CPLD), etc.

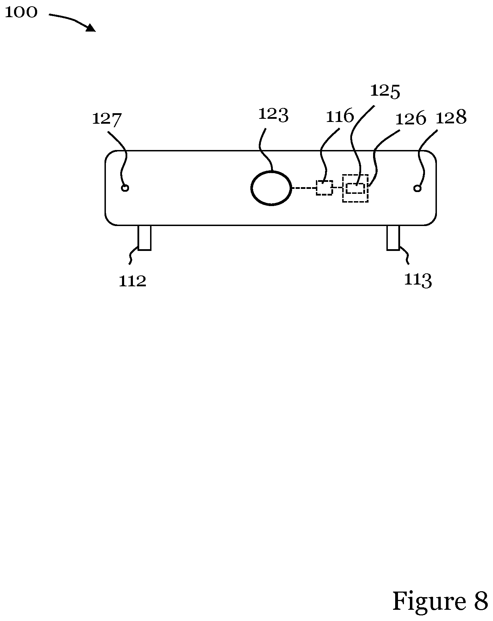

Figure 8 shows a front view of the robotic vacuum cleaner 100 of Figure 7 in an embodiment illustrating the previously mentioned obstacle detecting device in the form of a 3D sensor system comprising at least a camera 123 and a first and a second line laser 127, 128, which may be horizontally or vertically oriented line lasers. Further shown is the controller 116, the main body 111, and the driving wheels 112, 113. The controller 116 is operatively coupled to the camera 123 for recording images of a vicinity of the robotic vacuum cleaner 100. The first and second line lasers 127, 128 may preferably be vertical line lasers and are arranged lateral of the camera 123. The camera 123 is controlled by the controller 116 to capture and record a plurality of images per second. Data from the images is extracted by the controller 116 and the data is typically saved in the memory 126 along with the computer program 125. Hence, in an embodiment, the historical data forming a representation of an environment in which the robotic vacuum cleaner 100 moves are data being extracted from captured images of said environment.

The first and second line laser 127, 128 are configured to scan, preferably in a vertical orientation, the vicinity of the robotic vacuum cleaner 100, normally in the direction of movement of the robotic cleaning device 100. The first and second line lasers 127, 128 are configured to send out laser beams, which illuminate furniture, walls and other objects of e.g. a room to be cleaned. The camera 123 is controlled by the controller 116 to capture and record images from which the controller 116 creates a representation or layout of the surroundings that the robotic vacuum cleaner 100 is operating in, by extracting features from the images and by measuring the distance covered by the robotic vacuum cleaner 100, while the robotic vacuum cleaner 100 is moving across the surface to be cleaned. Thus, the controller 116 derives positional data of the robotic vacuum cleaner 100 with respect to the surface to be cleaned from the recorded images, generates a 3D representation of the surroundings from the derived positional data and controls the driving motors 115a, 115b to move the robotic vacuum cleaner across the surface to be cleaned in accordance with the generated 3D representation and navigation information supplied to the robotic vacuum cleaner 100 such that the surface to be cleaned can be navigated by taking into account the generated 3D representation. Alternatively, it would be possible to use 3D sensors utilizing time of flight measurements of an image being completely illuminated. With such a time of flight 3D sensor, the distance in a captured image would be determined for each pixel and distances to detected objects may be determined in line with the above.

The aspects of the present disclosure have mainly been described above with reference to a few embodiments and examples thereof. However, as is readily appreciated by a person skilled in the art, other embodiments than the ones disclosed above are equally possible within the scope of the disclosure, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. Method of controlling movement of a robotic cleaning device (100), the method being **characterized by**:
acquiring (S101) historical data comprising a statistical distribution indicating when the robotic cleaning device (100) is capable of reaching sections of a surface to be cleaned without moving objects and/or comprising a statistical distribution of expected poses of objects in said environment.
forming a representation of an environment in which the robotic cleaning device moves; and
controlling (S102) movement of the robotic cleaning device (100) to exert a force onto an object (101) located in the environment to move the object (101) based on the acquired historical data.

2. The method of claim 1, the controlling (s102) of the movement comprising:
controlling the robotic cleaning device (100) to push against the object (101) to move the object (101) based on the acquired historical data.

3. The method of claims 1 or 2, the controlling (S102) of the movement comprising:
controlling the robotic cleaning device (100) to exert a pulling force onto the object (101) to move the object (101) based on the acquired historical data.

4. The method of any one of the preceding claims, the controlling (S102) of the movement comprising:
moving the object (103) from a first position (A) to a second position (B) as indicated by the acquired historical data.

5. The method of claim 4, further comprising:
returning to the first position (A) for cleaning a surface previously occupied by the moved object (103) and/or
controlling movement of the robotic cleaning device (100) to exert a force onto the object (103) to move the object (103) back to the first position (A).

6. The method of any one of the preceding claims, wherein the acquiring (S101) of historical data is performed by controlling the robotic cleaning device (100) to move in said environment and record the data and/or wherein the acquiring (s101) of historical data is performed by receiving the data from another robotic cleaning device having been controlled to move in said environment and record the data.

7. The method of any one of the preceding claims, the controlling (S102) of the movement comprising:
controlling movement of the robotic cleaning device (100) to exert a force onto an object (104) located in the environment to move the object (104) to attain a desired orientation based on the acquired historical data.

8. The method of any one of the preceding claims, further comprising:
determining (S103) whether or not the exerted force exceeds a threshold value, and if so:
controlling (S104) movement of the robotic cleaning device (100) to stop exerting the force onto the object (101).

9. A robotic cleaning device (100) comprising:
a propulsion system (112, 113, 115a, 115b) configured to move the robotic cleaning device (100) over an area to be cleaned;
a memory (126) configured to store historical data forming a representation of an environment in which the robotic cleaning device (100) moves;
a camera device (123) arranged to capture images of the environment; and **characterized by**
a controller (116) configured to:
acquire the historical data comprising a statistical distribution indicating when the robotic cleaning device (100) is capable of reaching sections of a surface to be cleaned without moving objects and/or comprising a statistical distribution of expected poses of objects in said environment.
forming a representation of an environment in which the robotic cleaning device moves; and
control movement of the robotic cleaning device (100) to exert a force onto an object (101) located in the environment to move the object (101) based on the acquired historical data, preferably the controller (116) being configured to, when controlling the movement of the robotic cleaning device (100):
control the robotic cleaning device (100) to exert a force onto an object (104) located in the environment to move the object (104) to attain a desired orientation based on the acquired historical data.

10. The robotic cleaning device (100) of claim 9, the controller (116) being configured to, when controlling the movement of the robotic cleaning device (100):
control the robotic cleaning device (100) to push against the object (101) to move the object (101) based on the acquired historical data and/or the controller (116) being configured to, when controlling the movement of the robotic cleaning device (100):
control the robotic cleaning device (100) to exert a pulling force onto the object (101) to move the object (101) based on the acquired historical data.

11. The robotic cleaning device (100) of any one of claims 9-10, the controller (116) being configured to, when controlling the movement of the robotic cleaning device (100):
move the object (103) from a first position (A) to a second position (B) as indicated by the acquired historical data, and preferably when controlling the movement of the robotic cleaning device (100):
control the robotic cleaning device (100) to return to the first position (A) for cleaning a surface previously occupied by the moved object (103).

12. The robotic cleaning device (100) of claims 11, the controller (116) being configured to, when controlling the movement of the robotic cleaning device (100):
control the robotic cleaning device (100) to exert a force onto the object (103) to move the object (103) back to the first position (A).

13. The robotic cleaning device (100) of any of claims 9-12, the controller (116) being configured to, when acquiring the historical data:
control the robotic cleaning device (100) to move in said environment and record said data by controlling the camera device (123) to capture images of said environment and/or
receive said data from another robotic cleaning device having been controlled to move in said environment and record the data.

14. The robotic cleaning device (100) of any of claims 9-13, the controller (116) further being configured to:
determine whether or not the exerted force exceeds a threshold value, and if so:
control movement of the robotic cleaning device (100) to stop exerting the force onto the object (101).

15. The robotic vacuum cleaning device (100) of any one of claims 9-14, further comprising a cleaning member (117) for removing debris and dust from the surface to be cleaned, the controller (116) further being configured to switch the cleaning member (117) off upon the robotic vacuum cleaning device (100) exerting a force onto certain objects.

## Patentansprüche

1. Verfahren zum Steuern der Bewegung einer Roboterreinigungsvorrichtung (100), wobei das Verfahren **gekennzeichnet ist durch**:
Erfassen (S101) historischer Daten, die eine statistische Verteilung, die angibt, wann die Roboterreinigungsvorrichtung (100) Abschnitte einer zu reinigenden Fläche erreichen kann, ohne Gegenstände zu bewegen, umfassen und/oder eine statistische Verteilung erwarteter Stellungen von Gegenständen in der Umgebung enthalten;
Bilden einer Repräsentation einer Umgebung, in der sich die Roboterreinigungsvorrichtung bewegt; und
Steuern (S102) der Bewegung der Roboterreinigungsvorrichtung (100), eine Kraft auf einen Gegenstand (101) auszuüben, der sich in der Umgebung befindet, um den Gegenstand (101) zu bewegen, anhand der erfassten historischen Daten.

2. Verfahren nach Anspruch 1, wobei das Steuern (s102) der Bewegung Folgendes umfasst:
Steuern der Roboterreinigungsvorrichtung (100), gegen den Gegenstand (101) zu drücken, um den Gegenstand (101) zu bewegen, anhand der erfassten historischen Daten.

3. Verfahren nach den Ansprüchen 1 oder 2, wobei das Steuern (S102) der Bewegung Folgendes umfasst:
Steuern der Roboterreinigungsvorrichtung (100), eine Zugkraft auf den Gegenstand (101) auszuüben, um den Gegenstand (101) zu bewegen, anhand der erfassten historischen Daten.

4. Verfahren nach einem der vorhergehenden Ansprüche, wobei das Steuern (S102) der Bewegung Folgendes umfasst: Bewegen des Gegenstands (103) von einer ersten Position (A) zu einer zweiten Position (B) wie durch die erfassten historischen Daten angegeben.

5. Verfahren nach Anspruch 4, das ferner Folgendes umfasst:
Zurückkehren zu der ersten Position (A) zum Reinigen einer vorher durch den bewegten Gegenstand (103) besetzten Fläche und/oder
Steuern der Bewegung der Roboterreinigungsvorrichtung (100), eine Kraft auf den Gegenstand (103) auszuüben, um den Gegenstand (103) zurück zu der ersten Position (A) zu bewegen.

6. Verfahren nach einem der vorhergehenden Ansprüche, wobei das Erfassen (S101) historischer Daten durch Steuern der Roboterreinigungsvorrichtung (100), sich in der Umgebung zu bewegen und die Daten aufzuzeichnen, ausgeführt wird und/oder wobei das Erfassen (s101) historischer Daten durch Empfangen der Daten von einer anderen Roboterreinigungsvorrichtung, die gesteuert wurde, sich in der Umgebung zu bewegen und die Daten aufzuzeichnen, ausgeführt wird.

7. Verfahren nach einem der vorhergehenden Ansprüche, wobei das Steuern (S102) der Bewegung Folgendes umfasst: Steuern der Bewegung der Roboterreinigungsvorrichtung (100), eine Kraft auf einen Gegenstand (104) auszuüben, der sich in der Umgebung befindet, um den Gegenstand (104) zu bewegen, um eine gewünschte Ausrichtung zu erreichen, anhand der erfassten historischen Daten.

8. Verfahren nach einem der vorhergehenden Ansprüche, das ferner Folgendes umfasst:
Bestimmen (S103), ob die ausgeübte Kraft einen Schwellenwert überschreitet oder nicht, und wenn ja:
Steuern (S104) der Bewegung der Roboterreinigungsvorrichtung (100), die Ausübung der Kraft auf den Gegenstand (101) zu beenden.

9. Roboterreinigungsvorrichtung (100), die Folgendes umfasst:
ein Antriebssystem (112, 113, 115a, 115b), das konfiguriert ist, die Roboterreinigungsvorrichtung (100) über einen zu reinigenden Bereich zu bewegen;
einen Speicher (126), der konfiguriert ist, historische Daten, die eine Repräsentation einer Umgebung, in der sich die Roboterreinigungsvorrichtung (100) bewegt, bilden, zu speichern;
eine Kameravorrichtung (123), die ausgelegt ist, Bilder der Umgebung aufzunehmen; und **gekennzeichnet durch**:
eine Steuereinheit (116), die konfiguriert ist zum:
Erfassen der historischen Daten, die eine statistische Verteilung, die angibt, wann die Roboterreinigungsvorrichtung (100) Abschnitte einer zu reinigenden Fläche erreichen kann, ohne Gegenstände zu bewegen, umfassen und/oder eine statistische Verteilung erwarteter Stellungen von Gegenständen in der Umgebung enthalten;
Bilden einer Repräsentation einer Umgebung, in der sich die Roboterreinigungsvorrichtung bewegt; und
Steuern der Bewegung der Roboterreinigungsvorrichtung (100), eine Kraft auf einen Gegenstand (101) auszuüben, der sich in der Umgebung befindet, um den Gegenstand (101) zu bewegen, anhand der erfassten historischen Daten, wobei die Steuereinheit (116) vorzugsweise dann, wenn sie die Bewegung der Roboterreinigungsvorrichtung (100) steuert, konfiguriert ist zum:
Steuern der Roboterreinigungsvorrichtung (100), eine Kraft auf einen Gegenstand (104) auszuüben, der sich in der Umgebung befindet, um den Gegenstand (104) zu bewegen, um eine gewünschte Ausrichtung zu erreichen, anhand der erfassten historischen Daten.

10. Roboterreinigungsvorrichtung (100) nach Anspruch 9, wobei die Steuereinheit (116) dann, wenn sie die Bewegung der Roboterreinigungsvorrichtung (100) steuert, konfiguriert ist zum:
Steuern der Roboterreinigungsvorrichtung (100), gegen den Gegenstand (101) zu drücken, um den Gegenstand (101) zu bewegen, anhand der erfassten historischen Daten und/oder wobei die Steuereinheit (116) dann, wenn sie die Bewegung der Roboterreinigungsvorrichtung (100) steuert, konfiguriert ist zum:
Steuern der Roboterreinigungsvorrichtung (100), eine Zugkraft auf den Gegenstand (101) auszuüben, um den Gegenstand (101) zu bewegen, anhand der erfassten historischen Daten.

11. Roboterreinigungsvorrichtung (100) nach einem der Ansprüche 9-10, wobei die Steuereinheit (116) dann, wenn sie die Bewegung der Roboterreinigungsvorrichtung (100) steuert, konfiguriert ist zum:
Bewegen des Gegenstands (103) von einer ersten Position (A) zu einer zweiten Position (B) wie durch die erfassten historischen Daten angegeben und vorzugsweise dann, wenn sie die Bewegung der Roboterreinigungsvorrichtung (100) steuert:
Steuern der Roboterreinigungsvorrichtung (100), zu der ersten Position (A) zum Reinigen einer vorher durch den bewegten Gegenstand (103) besetzten Fläche zurückzukehren.

12. Roboterreinigungsvorrichtung (100) nach Anspruch 11, wobei die Steuereinheit (116) dann, wenn sie die Bewegung der Roboterreinigungsvorrichtung (100) steuert, konfiguriert ist zum:
Steuern der Roboterreinigungsvorrichtung (100), eine Kraft auf den Gegenstand (103) auszuüben, um den Gegenstand (103) zurück zu der ersten Position (A) zu bewegen.

13. Roboterreinigungsvorrichtung (100) nach einem der Ansprüche 9-12, wobei die Steuereinheit (116) dann, wenn sie die historischen Daten erfasst, konfiguriert ist zum: Steuern der Roboterreinigungsvorrichtung (100), sich in der Umgebung zu bewegen und die Daten durch Steuern der Kameravorrichtung (123), Bilder der Umgebung aufzunehmen, aufzuzeichnen, und/oder
Empfangen der Daten von einer anderen Roboterreinigungsvorrichtung, die gesteuert wurde, sich in der Umgebung zu bewegen und die Daten aufzuzeichnen.

14. Roboterreinigungsvorrichtung (100) nach einem der Ansprüche 9-13, wobei die Steuereinheit (116) ferner konfiguriert ist zum:
Bestimmen, ob die ausgeübte Kraft einen Schwellenwert überschreitet oder nicht, und wenn ja:
Steuern der Bewegung der Roboterreinigungsvorrichtung (100), zu beenden, die Kraft auf den Gegenstand (101) auszuüben.

15. Roboterstaubsaugvorrichtung (100) nach einem der Ansprüche 9-14, die ferner ein Reinigungselement (117) umfasst, um Fremdkörper und Staub von der zu reinigenden Fläche zu entfernen, wobei die Steuereinheit (116) ferner konfiguriert ist, das Reinigungselement (117) auszuschalten, wenn die Roboterstaubsaugvorrichtung (100) eine Kraft auf bestimmte Gegenstände ausübt.

## Revendications

1. Procédé de commande du mouvement d'un dispositif (100) de nettoyage robotisé, le procédé étant **caractérisé par** :
l'acquisition (S101) de données historiques comportant une distribution statistique indiquant le moment où le dispositif (100) de nettoyage robotisé est susceptible d'atteindre des sections d'une surface à nettoyer sans déplacer d'objets et/ou comportant une distribution statistique de poses prévues d'objets dans ledit environnement
la formation d'une représentation d'un environnement dans lequel le dispositif de nettoyage robotisé se déplace ; et
la commande (S102) du mouvement du dispositif (100) de nettoyage robotisé afin d'exercer une force sur un objet (101) situé dans l'environnement pour déplacer l'objet (101) d'après les données historiques acquises.

2. Procédé selon la revendication 1, la commande (s102) du mouvement comportant :
la commande du dispositif (100) de nettoyage robotisé afin de pousser l'objet (101) pour déplacer l'objet (101) d'après les données historiques acquises.

3. Procédé selon les revendications 1 ou 2, la commande (S102) du mouvement comportant :
la commande du dispositif (100) de nettoyage robotisé afin d'exercer une force de traction sur l'objet (101) pour déplacer l'objet (101) d'après les données historiques acquises.

4. Procédé selon l'une quelconque des revendications précédentes, la commande (S102) du mouvement comportant : le déplacement de l'objet (103) d'une première position (A) à une seconde position (B) telle qu'indiquée par les données historiques acquises.

5. Procédé selon la revendication 4, comportant en outre :
le retour à la première position (A) pour nettoyer une surface occupée précédemment par l'objet (103) déplacé et/ou
la commande du mouvement du dispositif (100) de nettoyage robotisé afin d'exercer une force sur l'objet (103) pour ramener l'objet (103) à la première position (A).

6. Procédé selon l'une quelconque des revendications précédentes, l'acquisition (S101) de données historiques étant effectuée en commandant le dispositif (100) de nettoyage robotisé pour qu'il se déplace dans ledit environnement et enregistre les données et/ou l'acquisition (s101) de données historiques étant effectuée en recevant les données en provenance d'un autre dispositif de nettoyage robotisé qui a été commandé pour se déplacer dans ledit environnement et enregistrer les données.

7. Procédé selon l'une quelconque des revendications précédentes, la commande (S102) du mouvement comportant : la commande du mouvement du dispositif (100) de nettoyage robotisé afin d'exercer une force sur un objet (104) situé dans l'environnement pour déplacer l'objet (104) pour atteindre une orientation souhaitée d'après les données historiques acquises.

8. Procédé selon l'une quelconque des revendications précédentes, comportant en outre :
le fait de déterminer (S103) si la force exercée dépasse ou non une valeur seuil, et si c'est le cas :
la commande (S104) du mouvement du dispositif (100) de nettoyage robotisé afin qu'il cesse d'exercer la force sur l'objet (101).

9. Dispositif (100) de nettoyage robotisé comportant :
un système (112, 113, 115a, 115b) de propulsion configuré pour déplacer le dispositif (100) de nettoyage robotisé sur une zone à nettoyer ;
une mémoire (126) configurée pour stocker des données historiques formant une représentation d'un environnement dans lequel le dispositif (100) de nettoyage robotisé se déplace ;
un dispositif (123) de caméra agencé pour capturer des images de l'environnement ; et **caractérisé par** un moyen (116) de commande configuré pour :
acquérir les données historiques comportant une distribution statistique indiquant le moment où le dispositif (100) de nettoyage robotisé est susceptible d'atteindre des sections d'une surface à nettoyer sans déplacer d'objets et/ou comportant une distribution statistique de poses prévues d'objets dans ledit environnement
la formation d'une représentation d'un environnement dans lequel le dispositif de nettoyage robotisé se déplace ; et
commander le mouvement du dispositif (100) de nettoyage robotisé afin d'exercer une force sur un objet (101) situé dans l'environnement pour déplacer l'objet (101) d'après les données historiques acquises, le moyen (116) de commande étant de préférence configuré pour, lors de la commande du mouvement du dispositif (100) de nettoyage robotisé :
commander le dispositif (100) de nettoyage robotisé afin d'exercer une force sur un objet (104) situé dans l'environnement pour déplacer l'objet (104) pour atteindre une orientation souhaitée d'après les données historiques acquises.

10. Dispositif (100) de nettoyage robotisé selon la revendication 9, le moyen (116) de commande étant configuré pour, lors de la commande du mouvement du dispositif (100) de nettoyage robotisé :
commander le dispositif (100) de nettoyage robotisé afin de pousser l'objet (101) pour déplacer l'objet (101) d'après les données historiques acquises et/ou le moyen (116) de commande étant configuré pour, lors de la commande du mouvement du dispositif (100) de nettoyage robotisé :
commander le dispositif (100) de nettoyage robotisé afin d'exercer une force de traction sur l'objet (101) pour déplacer l'objet (101) d'après les données historiques acquises.

11. Dispositif (100) de nettoyage robotisé selon l'une quelconque des revendications 9 à 10, le moyen (116) de commande étant configuré pour, lors de la commande du mouvement du dispositif (100) de nettoyage robotisé :
déplacer l'objet (103) d'une première position (A) à une seconde position (B) telle qu'indiquée par les données historiques acquises, et de préférence lors de la commande du mouvement du dispositif (100) de nettoyage robotisé :
commander le dispositif (100) de nettoyage robotisé afin qu'il revienne à la première position (A) pour nettoyer une surface occupée précédemment par l'objet (103) déplacé.

12. Dispositif (100) de nettoyage robotisé selon la revendication 11, le moyen (116) de commande étant configuré pour, lors de la commande du mouvement du dispositif (100) de nettoyage robotisé :
commander le dispositif (100) de nettoyage robotisé afin d'exercer une force sur l'objet (103) pour ramener l'objet (103) à la première position (A).

13. Dispositif (100) de nettoyage robotisé selon l'une quelconque des revendications 9 à 12, le moyen (116) de commande étant configuré pour, lors de l'acquisition des données historiques :
commander le dispositif (100) de nettoyage robotisé pour qu'il se déplace dans ledit environnement et enregistre lesdites données en commandant le dispositif (123) de caméra pour capturer des images dudit environnement et/ou recevoir lesdites données en provenance d'un autre dispositif de nettoyage robotisé qui a été commandé pour se déplacer dans ledit environnement et enregistrer les données.

14. Dispositif (100) de nettoyage robotisé selon l'une quelconque des revendications 9 à 13, le moyen (116) de commande étant en outre configuré pour :
déterminer si la force exercée dépasse ou non une valeur seuil, et si c'est le cas :
commander le mouvement du dispositif (100) de nettoyage robotisé afin qu'il cesse d'exercer la force sur l'objet (101).

15. Dispositif (100) d'aspiration robotisé selon l'une quelconque des revendications 9 à 14, comportant en outre un organe (117) de nettoyage servant à retirer des débris et de la poussière de la surface à nettoyer, le moyen (116) de commande étant en outre configuré pour éteindre l'organe (117) de nettoyage lorsque le dispositif (100) d'aspiration robotisé exerce une force sur certains objets.
